Europäisches Patentamt

**European Patent Office**

Office européen des brevets

(19)

(11) Numéro de publication: **0 017 545
B1**

# (12) FASCICULE DE BREVET EUROPEEN

(45) Date de publication du fascicule du brevet:
06.04.83

(21) Numéro de dépôt: **80400372.1**

(22) Date de dépôt: **20.03.80**

(51) Int. Cl.³: **H 02 B 13/02**

---

(54) **Sectionneur triphasé pour cellule de distribution moyenne tension.**

---

(30) Priorité: **28.03.79 FR 7908412**

(43) Date de publication de la demande:
**15.10.80 Bulletin 80/21**

(45) Mention de la délivrance du brevet:
**06.04.83 Bulletin 83/14**

(84) Etats contractants désignés:
**BE CH DE GB IT NL SE**

(56) Documents cités:
**DE-B-1 220 505
DE-C-909 595
GB-A-1 229 834**

(73) Titulaire: **SOCIETE ANONYME DOUAISIENNE DE
TRANSFORMATEURS ELECTRIQUES DE MESURE
"SADTEM", 148, rue Martin du Nord, F-59500 Douai (FR)**

(72) Inventeur: **Avocat, Jean-Paul, 4, rue Philippe Lebon,
F-59500 Lambres Les Douai (FR)**

(74) Mandataire: **Lemoine, Jean, 12, boulevard de la Liberté,
F-59800 Lille (FR)**

---

## Sectionneur triphasé pur cellule de distribution moyenne tension

Domaine technique.

La présente invention concerne un sectionneur triphasé dont l'axe est situé dans le plan des lignes parallèles que constituent approximativement les conducteurs, ledit axe étant perpendiculaire auxdites lignes, assurant au moins la fonction déconnexion d'un appareil de coupure adjacent, comprenant un équipage mobile pivotant autour d'un axe et monté sur un châssis, un cylindre central en matière isolante, susceptible de tourner autour de cet axe et commandé par une manette, pour pouvoir osciller entre deux positions extrêmes suivant une amplitude d'un quart de tour, des pôles de sectionneur composés chacun d'une âme conductrice solidaire du cylindre, traversant celui-ci diamètralement, et portant à chaque extrémité un moyen d'embrochage électrique coopérant lors de la rotation de l'équipage mobile, avec des contacts correspondants d'organes de la cellule, l'âme conductrice formant des bras de part et d'autre du cylindre, les âmes conductrices étant situées dans un même plan passant par l'axe du cylindre, les bras d'un côté coopérant avec les contacts fixes de la cellule, pour assurer la fonction sectionnement-isolement en position d'ouverture, dans leur position verticale, et avec d'autres contacts, dans leur position horizontale, les autres bras, en position de fermeture coopérant avec les contacts correspondants de l'appareil de coupure adjacent, pour assurer la fonction de déconnexion pour autant que la tension du réseau l'exige, les bras étant recouverts d'une matière isolante jusqu'aux pièces de raccordement situées à leur extrémité, des écrans fixés au châssis, les bords libres desdits écrans s'approchant aussi près que possible du cylindre et des contacts sur le châssis, reliés à la masse, coopérant avec les contacts aux extrémités des premiers bras, en position horizontale, c'est-à-dire en position d'ouverture du sectionneur.

Problème posé et état de la technique antérieure.

Il faut remarquer dans les cellules de distribution moyenne tension une disposition fréquente de l'appareillage visant à rendre le disjoncteur «débrochable»: celui-ci doit pouvoir être isolé du jeu de barres, ou encore des câbles d'arrivée, restés sous tension, (fonction isolement-sectionnement), puis extrait de la cellule, généralement par translation, ses bornes étant automatiquement déconnectées des conducteurs fixes, au moyen d'une association de pinces élastiques et de plots d'embrochage, tandis que des dispositifs de protection interdisent les fausses manœuvres et les accidents de personnes, (fonction déconnexion).

On utilise habituellement un sectionneur rotatif à bras symétriques dont la partie centrale voisine de l'axe est au potentiel de la masse ce qui oblige à prévoir des bras égaux dont la longueur est déterminée par la tension d'isolement requise. La distance séparant les contacts fixes du sectionneur est donc au moins égale à deux fois la distance d'isolement requise.

Le disjoncteur est disposé sur un châssis extractible, ses bornes sortant respectivement vers le haut et vers le bas. Ce châssis extractible est disposé entre deux sectionneurs placés symétriquement, l'un au-dessus, l'autre en-dessous de lui, chacun de ces sectionneurs assurant

- la fonction sectionnement-isolement décrite plus haut,
- la fonction déconnexion décrite plus haut,
- éventuellement une ou plusieurs fonctions transformateur de courant,
- éventuellement une fonction diviseur de tension capacitif pour l'alimentation des indicateurs de présence de tension.

Un sectionneur de ce type est décrit dans le document GB-A-1 229 834.

Les sectionneurs ayant des bras égaux pour assurer la fonction sectionnement-isolement, il en résulte un encombrement important dans l'axe principal (généralement la verticale) de l'appareil. L'invention a pour but principal de réduire cet encombrement.

Exposé de l'invention.

L'invention est caractérisée principalement par la combinaison:

a) de deux premiers et deuxièmes bras, dont la longueur est inégale,

b) de deuxième bras qui sont aussi courts que le permettent les exigences d'isolement à la masse et entre pôles,

c) d'écrans fixés à ce châssis, qui sont décalés de part et d'autre du plan diamètral horizontal du cylindre, l'un conducteur au voisinage des bras longs, l'autre isolant au voisinage des bras courts, le décalage ayant une valeur au moins égale à l'encombrement vertical des bras dans leur position horizontale.

D'après des modes particuliers de réalisation le châssis est coulissant et le guidage en rotation de l'équipage mobile s'effectue, à au moins une des extrémités dudit ensemble, par appui sur trois galets à axes parallèles à celui du cylindre et fixés sur la façade ou le fond correspondant du châssis. Ces galets peuvent rouler à l'extérieur du cylindre mais on préfère les faire rouler à l'intérieur d'un alésage pratiqué à l'extrémité du cylindre, concentriquement à celui-ci.

Le sectionneur de l'invention contenant des transformateurs de courant prévus en coopération avec l'âme d'au moins un pôle, lesdits transformateurs étant placés dans le cylindre ainsi que les sorties de leurs enroulements secondaires qui aboutissent à des bornes mobiles, solidaires de l'équipage mobile, une des caractéristiques essentielle de l'invention réside dans le fait que les bornes sont reliées à des bornes fixées au châssis par des liaisons souples appropriées constituées par un faisceau de fils souples s'enroulant en spirale dans une gorge du cylindre concentrique à celui-ci une extrémité du faisceau traversant le fond de la gorge pour aboutir dans un alésage pratiqué dans des extrémités de celui-ci et être reliée aux bornes mobiles qui y aboutissent tandis que l'autre extrémité du faisceau est connectée aux bornes fixes du châssis.

Dans une première version, le transformateur de courant est du type à primaire monoconducteur réalisé dans chaque pôle par au moins un noyau composé d'un circuit magnétique autour duquel est bobiné un enroulement secondaire, lequel noyau est enfilé autour de l'âme conductrice et à l'intérieur du cylindre central.

Dans une deuxième version, le transformateur de courant est réalisé dans chaque pôle et au sein du cylindre central par un enroulement primaire à plusieurs spires insérées entre les bras conducteurs d'un pôle traversant perpendiculairement un ou plusieurs noyaux.

Dans le cas d'un transformateur à primaire monoconducteur, on aura dans certains cas avantage à prévoir que l'âme conductrice ait un profil coudé avec une partie médiante concentrique au cylindre central, autour de laquelle sont disposés les noyaux.

Dans la version où les transformateurs de courant sont réalisés au sein du cylindre central, les noyaux de ces transformateurs de courant sont enfilés, après moulage, autour de traversées isolantes constituées par l'âme conductrice du bras long d'un pôle revêtu d'une matière isolante, à l'intérieur d'alvéoles prévus dans le cylindre central, des goulottes étant prévues pour disposer les fils de liaison entre les bobinages et les bornes en bout de cylindre.

Cependant la réalisation qui vient d'être décrite n'est pas exclusive. En effet, on peut s'arranger pour que la matière isolante de l'équipage mobile enrobe les âmes conductrices, les enroulements primaires et les noyaux des différents pôles, les noyaux étant soutenus, au moment de la coulée, par des supports servant de goulottes aux fils venant des noyaux, qui sont amenés aux bornes extérieures. Dans le cas où les noyaux de transformateur de courant sont enfilés après moulage autour de traversées isolantes, les alvéoles contenant les circuits magnétiques et leur bobinage sont tapissés avantageusement d'un revêtement conducteur relié à la masse tandis que des moyens sont prévus pour éviter la formation d'effluves électriques à l'extérieur de l'équipage mobile entre les contacts aux extrémités des pôles et le revêtement conducteur à la masse, à savoir:

a) sur le long bras, un dispositif approprié réalise une répartition linéaire de tension,

b) sur le cylindre et le petit bras, des ombelles augmentant de la valeur voulue les distances de cheminement d'éventuelles étincelles mais ayant une forme ne gênant pas la rotation du cylindre vis-à-vis de l'écran correspondant.

Suivant une forme particulière, le dispositif réalisant une répartition linéaire de tension est un revêtement semi-conducteur constitué notamment par une graisse semi-conductrice serrée en sandwich par une gaine tubulaire thermorétractable.

De toute façon, on peut prévoir un diviseur capacitif dans chaque pôle, moulé dans la masse de la matière isolante du cylindre et constitué par un écran conducteur tubulaire concentrique à l'âme centrale du couple de bras, ledit écran étant relié électriquement à un conducteur noyé dans le cylindre et aboutissant à une borne à une extrémité de celui-ci.

Avantages et résultat industriel.

Par le dispositif de l'invention indiqué plus haut, on simplifie considérablement l'appareillage antérieur tout en diminuant la distance entre les contacts fixes du sectionneur et donc en diminuant l'encombrement de la cellule.

L'invention sera mieux comprise à l'aide de la description ci-après qui en donne quelques exemples non limitatifs de réalisation pratique et qui sont illustrés par les dessins joints.

Brève description des figures.
Dans ces dessins:

La fig. 1 est une vue schématique, en coupe verticale, d'une cellule de l'invention comportant deux sectionneurs suivant l'invention encadrant un disjoncteur extractible.

La fig. 2 est une coupe transversale, perpendiculaire au diamètre, d'une première version d'un équipage mobile suivant l'invention.

La fig. 3 est une coupe transversale, perpendiculaire à l'axe de rotation, d'une deuxième version d'un équipage mobile suivant l'invention.

La fig. 4 est une coupe longitudinale axiale, passant par les bras, d'un équipage mobile tripolaire de l'invention suivant AA de la fig. 3.

La fig. 5 est une vue en perspective de l'extrémité coupée de l'équipage mobile représenté à la fig. 4.

La fig. 6 est une coupe transversale perpendiculaire au diamètre d'une troisième version d'un équipage mobile suivant l'invention.

La fig. 7 est une coupe détaillée agrandie de l'équipage mobile comme représenté à la fig. 6.

La fig. 8 est une coupe axiale longitudinale partielle d'une version différente de l'équipage mobile.

La fig. 9 est une coupe transversale, perpendiculaire au diamètre, d'une quatrième version d'un ensemble rotatif oscillant suivant l'invention, la version possédant un transformateur de courant intercalé entre deux tronçons de l'âme d'un couple de bras.

La fig. 10 est une coupe longitudinale axiale suivant BB de la fig. 9.

La fig. 11 est une coupe horizontale axiale suivant CC de la fig. 9.

Description de quelques modes de réalisation.

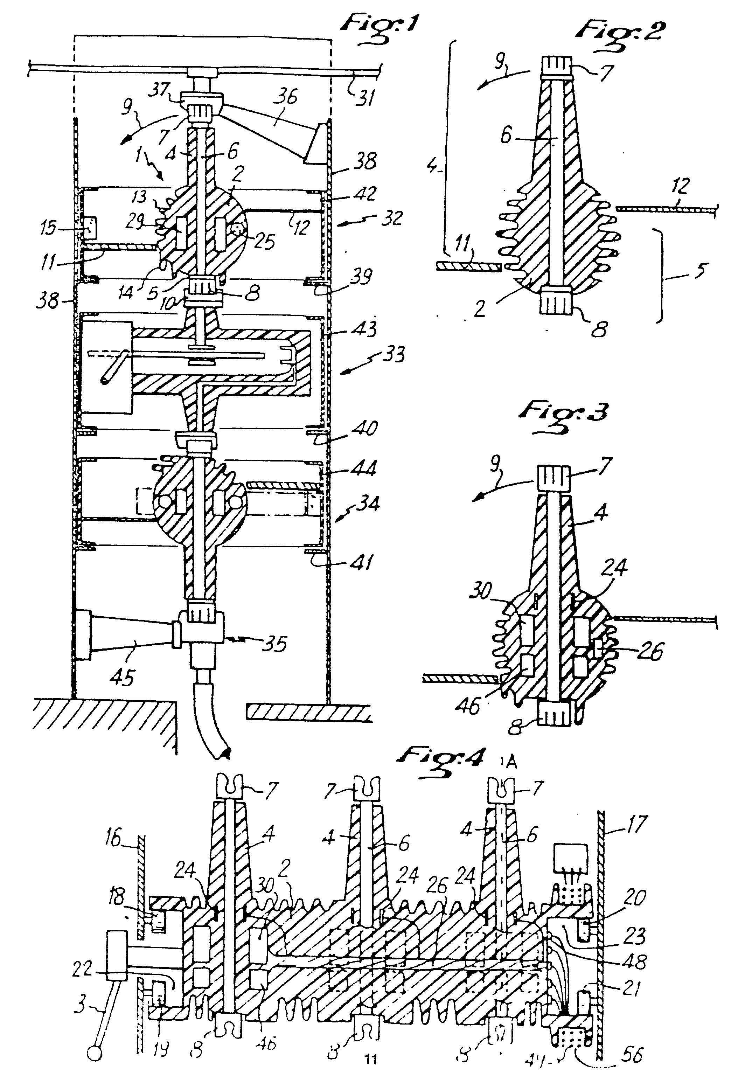

La cellule représentée à la fig. 1 correspond à une phase d'un jeu de barres 31 supporté par un isolateur 36 dont l'extrémité présente, notamment, une lame de contact fixe 37 qui coopère, comme on le verra tout à l'heure, avec le sectionneur-transformateur de courant 32 qui fait l'objet de l'invention. Le sectionneur 32 sert donc à sectionner ou à mettre en liaison électrique la lame de contact fixe 37 reliée à l'une des barres du jeu 31 à un disjoncteur 33.

Le disjoncteur 33 peut d'ailleurs être connecté à la tête de câble 35 ou en être déconnecté à volonté à l'aide d'un sectionneur 34 similaire au sectionneur 32.

La cellule, généralement métallique et reliée à la masse comporte des parois verticales 38 et des glissières telles que 39, 40, 41 sur lesquelles coulissent les châssis 42, 43, 44 des sectionneurs. La tête de câble 35 est maintenue par un support isolant 45 fixé à la paroi latérale 38 de la cellule.

L'invention concerne la constitution des sectionneurs 32 et 34 qui vont maintenant être décrits plus en détail.

Le sectionneur de la cellule tel que 32 et 34, comprend essentiellement un équipage mobile 1 composé d'une poutre ou cylindre central 2, en matière isolante, susceptible de tourner autour de son axe car elle est soutenue à chaque extrémité par des paliers. L'axe de la poutre 2 est perpendiculaire à la façade du châssis 42 ou 44 et la rotation de la poutre ou cylindre 2 est réalisée à l'aide d'une manette 3 (fig. 4). Traversant diamètralement la poutre ou cylindre 2, sont prévus des bras de sectionneur tels que 4, 5 comportant une âme centrale conductrice 6 terminée, à chaque extrémité libre des bras 4, 5, par des pinces d'embrochage électrique respectivement 7, 8. En général, il y a trois couples de bras 4, 5 qui correspondent chacun à une barre du jeu 31; naturellement le nombre de pôles de l'équipage mobile 1 est totalement indépendant de l'invention. En fait, le bras 4 est beaucoup plus long que le bras 5 et tous les bras sont situés dans un même plan passant par l'axe de l'équipage mobile 1. La longueur du bras 5 dépend de la distance d'isolement.

Chaque pôle comprenant un bras long 4 et un bras court 5 contient donc un conducteur ou âme centrale 6 enrobé de matière isolante. Lors de la rotation de l'équipage 1 suivant la flèche 9, le bras long 4 assure la fonction sectionnement-isolement, tandis que le bras court 5 diamètralement opposé, enrobé également de matière isolante sur une longueur aussi réduite que le permettent les exigences de tenue diélectrique par rapport à la masse et au pôle voisin, assure la fonction déconnexion de l'interrupteur ou disjoncteur associé 33. L'extrémité libre de l'âme centrale 6 du grand bras 4 porte une pince d'embrochage 7 à contacts élastiques venant serrer, en position de fermeture, la lame de contact ou les plots d'embrochage de la lame de contact fixe 37 reliée à l'une des barres du jeu 31. L'autre extrémité libre de l'âme centrale 6, à l'extrémité du petit bras 5, porte aussi des pinces d'embrochage destinées à serrer les plots d'embrochage 10 de la borne correspondante du disjoncteur 33. Les pinces 7, 8 se déplacent donc, lors de la rotation de l'ensemble rotatif oscillant 1, dans un plan perpendiculaire à l'axe de ladite poutre ou cylindre central 2. En fait l'amplitude de rotation de l'ensemble rotatif 1 est d'un quart de tour entre la position verticale des bras 4, 5 (pour assurer les contacts électriques) et leur position horizontale (pour assurer le sectionnement).

On prévoit encore des écrans ou cloisons 11, 12 fixés au châssis 42 et décalés de part et d'autre du plan diamétral horizontal du cylindre 2; ce décalage a une valeur au moins égale à l'encombrement vertical des bras 4 et 5 dans leur position horizontale pour permettre, justement, de ne pas gêner le positionnement horizontal desdits bras 4 et 5. Les bords des écrans 11 et 12 sont d'un côté fixés au châssis 42 tandis que l'autre bord libre s'approche aussi près que possible du cylindre 2. Pour des raisons économiques, les écrans 11 et 12 pourraient être tous les deux métalliques. Toutefois on préfère réaliser l'écran 11, c'est-à-dire celui qui est le plus près de la pince d'embrochage 8 et du plot d'embrochage 10, en matière isolante. Dans un même souci d'isolation, on prévoit des chicanes ou ombelles 13, 14 moulées le long des génératrices de la poutre en vue d'empêcher le passage d'un fil métallique (comme le prévoit les réglements) et de gêner le déplacement de masse gazeuse de part et d'autre de la cloison 11.

Le châssis 42 présente encore une lame de contact 15 sur laquelle peut venir s'embrocher la pince 7 à l'extrémité du bras 4 lorsque celui-ci est horizontal, c'est-à-dire en position d'ouverture du sectionneur afin de mettre à la masse l'âme centrale 6 par l'intermédiaire de la pince 7, du contact 15, du châssis 42 et de la paroi 38.

La poutre 2 a un diamètre relativement important. Elle peut pivoter, à ses deux extrémités, dans des paliers ménagés dans la façade 16 et le fond 17 du châssis 42 et 44. Ces paliers peuvent être réalisés à l'aide d'un appui sur trois galets tels que 18, 19, 20, 21 dont les axes sont parallèles à celui du cylindre 2 et fixés à la façade 16 et au fond 17 respectivement. Les galets peuvent s'appuyer sur la périphérie extérieure de la poutre 2 mais, dans le cas représenté aux fig. 4 et 5, on a préféré faire rouler les galets 18, 19, 20, 21 à l'intérieur d'une gorge 22 ou 23 pratiquée à chaque extrémité du cylindre 2, lesdites gorges 22 et 23 étant concentriques audit cylindre.

Le diamètre relativement important de la poutre du cylindre 2 permet d'y loger toutes sortes d'appareillages comme il va être expliqué maintenant.

En premier lieu on peut y loger un ou plusieurs transformateurs de courant à primaire monoconducteur (fig. 1, 2, 3, 4, 5, 6, 7, 8) constitués par l'âme centrale conductrice 6 ou conducteur du pôle correspondant. On peut aussi y loger un primaire bobiné 23 (fig. 9, 10, 11), chacun d'eux ayant un ou plusieurs noyaux, dans les limites possibles d'encombrement.

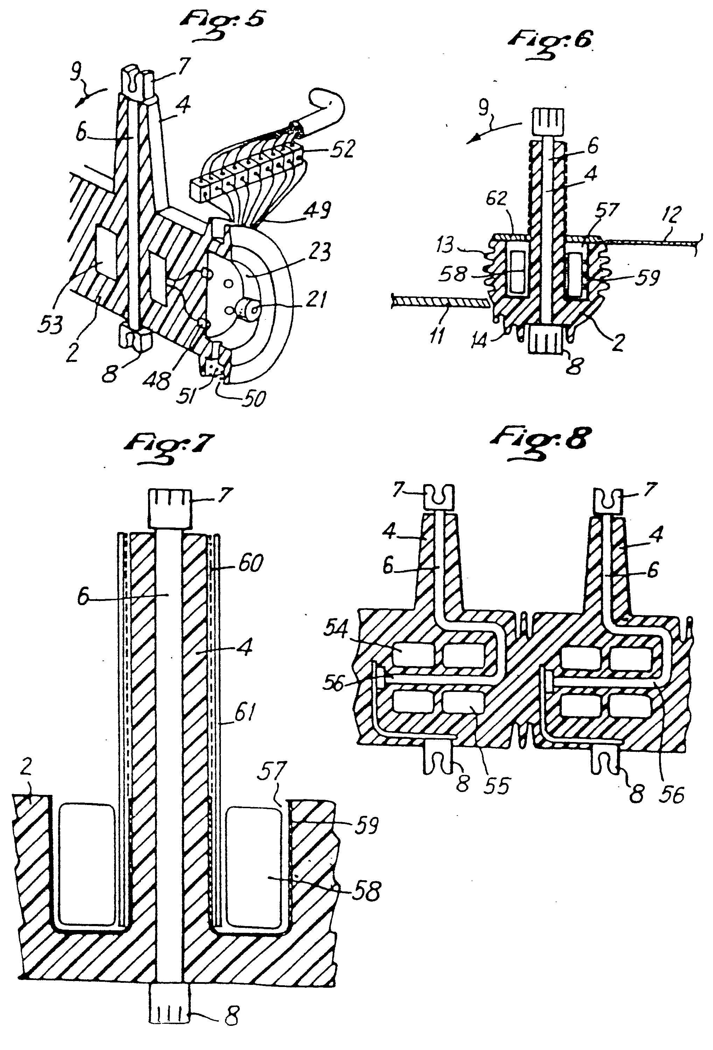

Chaque pôle peut aussi comporter une armature de condensateur 24 (fig. 3 et 4) à un potentiel voisin de celui de la masse, tenant lieu de diviseur-capacitif pour l'indication de présence de tension ou pour tout autre usage que l'on jugera utile. L'armature 24 est généralement constituée par un cylindre grillagé coaxial à l'âme 6.

La filerie basse tension 26, 27, 28 provenant des secondaires 29, 30, 46, 47 des transformateurs de courant ou des diviseurs capacitifs 24 passe dans des conduits comportant une gaine conductrice mise à la masse placée parallèlement à l'axe de la poutre ou cylindre central 2, se prolongeant jusqu'au fond du châssis 42, 44 pour aboutir à des plots ou bornes 48, le tout étant noyé dans la masse isolante de la poutre 2. Aux plots ou bornes 48 sont connectées les extrémités de fils isolés souples 49 constitués en faisceau qui s'enroulent en spirale dans une gorge 50 cylindrique, concentrique au cylindre 2. A cet effet, le faisceau de fils 49 traverse le fond de la gorge dans un trou 51 pour aboutir aux plots ou bornes mobiles 48 tandis que les autres extrémités des fils souples 49 aboutissent à des bornes fixes 52 fixées aux châssis 42, 44.

Les transformateurs de courant eux-mêmes peuvent être constitués de plusieurs manières.

Dans un premier cas (fig. 1, 3, 4, 5, 8, 9, 10, 11), on moule le cylindre ou poutre 2 en enrobant simultanément un noyau toroïdal ou secondaire 29, 30, 46, 53, 54 coaxial au conducteur, pôle ou âme centrale conductrice 6 de l'ensemble rotatif oscillant 1. Dans ce cas, l'âme centrale conductrice réalise un primaire monoconducteur.

Dans le cas des fig. 9 à 11, on a un enroulement primaire à plusieurs spires 23 qui coopère avec un noyau 47 passant dans le primaire 23 dans un plan perpendiculaire à celui-ci. L'ensemble est aussi noyé dans une matière isolante.

Dans le cas de la fig. 8, on a fait prendre à l'âme centrale conductrice 6 un parcours à profil coudé avec une partie médiane 56 concentrique au cylindre 2 et autour de laquelle sont disposés les noyaux 54, 55, l'ensemble étant encore enrobé de matière isolante. L'isolement est de préférence, mais non exclusivement, réalisé par des coulées de matière isolante.

La technique de la coulée est connue en soi mais il faut parfois maintenir certaines pièces enrobées au cours de la coulée de la matière plastique. Ainsi les âmes centrales conductrices 6 sont maintenues, dans le moule, à leurs deux extrémités. Les secondaires 47 ou 54, 55, ou 30, 46, sont maintenus par les goulottes métalliques entourant la filerie basse tension 25, 26, 27, 28.

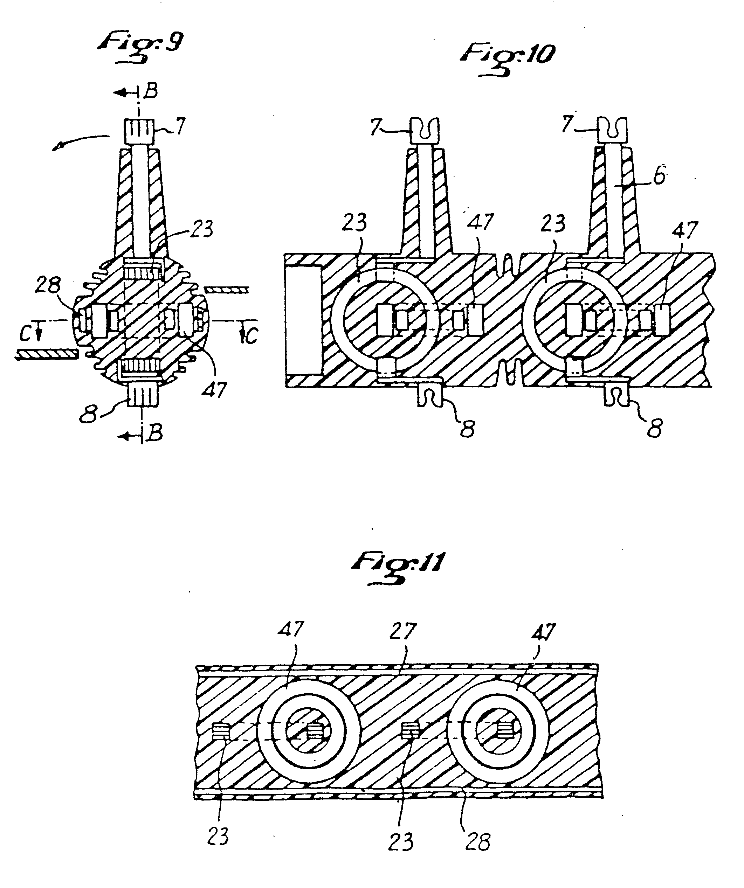

Une autre technique consiste à mouler préalablement (fig. 6 et 7) la poutre ou cylindre central 2 avec des ombelles ou chicanes 13, 14 ainsi que son âme centrale conductrice 6 en réservant un alvéole 57 concentrique au bras 4. On enfile ensuite un ou plusieurs noyaux 58 sur le bras 4 noyant l'âme centrale 6 pour qu'ils viennent se placer dans l'alvéole 57. L'alvéole 57 a été préalablement tapissé d'un revêtement conducteur 59 relié à la masse. Cette disposition risquerait de provoquer des effluves entre le revêtement 59 et la pince d'embrochage 7. Pour éviter cela, on prévoit le long du bras 4, un revêtement semi-conducteur 60, qui est généralement une graisse semi-conductrice, serrée en sandwich par une gaine tubulaire thermo-rétractable 61. Cette technique est déjà connue. Elle a l'avantage d'assurer une configuration convenable du champ électrique dans l'air au voisinage de la portion de traversée constituant le bras de sectionneur 4. Le revêtement semi-conducteur 60, réalisé par une graisse contenant des éléments conducteurs, assure la répartition linéaire de la tension le long de la ligne de fuite entre le revêtement conducteur 59, qui est mis à la masse, et la pince d'embrochage 7.

Le phénomène d'ionisation du côté du long bras 4 est donc évité.

Il y a aussi un autre phénomène qui pourrait se produire du côté du bras 5. En effet, on sait qu'il faut assurer une certaine distance d'isolement à la surface des pièces isolantes. Cette distance nécessite parfois d'être allongée lorsque les pièces risquent d'être recouvertes de poussière, pour empêcher la formation d'étincelles. Cette technique est largement connue dans les isolateurs où on pratique des ombelles.

Pour éviter la formation d'étincelles à partir de la pince d'embrochage 8, d'autant plus que l'on veut conserver au châssis 42 ou 44 une hauteur réduite, qui est de l'ordre du diamètre du cylindre 2, et pour pouvoir réduire en même temps la longueur du bras 5 de déconnexion tout en assurant un isolement électrique suffisant par rapport à la masse, il est donc nécessaire de prévoir des ombelles telles que 13 ou 14 moulées dans le sens de l'axe de la poutre. Il faut toutefois que ces ombelles 13, 14 s'inscrivent convenablement dans la trajectoire des diverses pièces en rotation de la poutre 2, c'est-à-dire que leurs extrémités ne risquent pas de venir heurter l'écran ou cloison 11.

Le noyau 8 est maintenu convenablement à l'intérieur de l'alvéole 57 et en particulier par un couvercle annulaire 62.

**Revendications**

1. Sectionneur triphasé dont l'axe est situé dans le plan des lignes parallèles que constituent approximativement les conducteurs, ledit axe étant perpendiculaire auxdites lignes, assurant au moins la fonction déconnexion d'un appareil de coupure adjacent, comprenant un équipage mobile pivotant autour d'un axe et monté sur un châssis, un cylindre central en matière isolante, susceptible de tourner autour de cet axe et commandé par une manette, pour pouvoir osciller entre deux positions extrêmes suivant une amplitude d'un quart de tour, des pôles de sectionneur composés chacun d'une âme conductrice solidaire du cylindre, traversant celui-ci diamètralement, et portant à chaque extrémité un moyen d'embrochage électrique coopérant lors de la rotation de l'équipage mobile, avec des contacts correspondants d'organes de la cellule, l'âme conductrice formant des bras de part et d'autre du cylindre, les âmes conductrices étant situées dans un même plan passant par l'axe du cylindre, les bras d'un côté coopérant avec les contacts fixes de la cellule, pour assurer la fonction sectionnement-isolement en position d'ouverture, dans leur position verticale, et avec d'autres contacts, dans leur position horizontale, les autres bras, en position de fermeture coopérant avec les contacts correspondants de l'appareil de coupure adjacent, pour assurer la fonction de déconnexion pour autant que la tension du réseau l'exige, les bras étant recouverts d'une matière isolante jusqu'aux pièces de raccordement situées à leur extrémité, des écrans fixés au châssis, les bords libres desdits écrans s'approchant aussi près que possible du cylindre et des contacts sur le châssis, reliés à la masse, coopérant avec les contacts aux extrémités des premiers bras, en position horizontale, c'est-à-dire en position d'ouverture du sectionneur, caractérisé par la combinaison:

a) de deux premiers et deuxièmes bras (4, 5) dont la longueur est inégale,

b) de deuxièmes bras (5) qui sont aussi courts que le permettent les exigences d'isolement à la masse et entre pôles,

c) d'écrans fixés à ce châssis, qui sont décalés de part et d'autre du plan diamètral horizontal du cylindre, l'un conducteur (12) au voisinage des bras longs (4), l'autre isolant (11) au voisinage des bras courts (5), le décalage ayant une valeur au moins égale à l'encombrement vertical des bras dans leur position horizontale.

2. Sectionneur triphasé, tel que défini dans la revendication 1, caractérisé par le fait qu'il est monté sur un châssis coulissant.

3. Sectionneur, tel que défini dans l'une ou l'autre des revendications 1, 2, caractérisé par le fait que le guidage en rotation de l'équipage mobile s'effectue, à au moins une des extrémités dudit ensemble par appui sur trois galets à axes parallèles à celui du cylindre et fixés sur la façade ou le fond correspondant du châssis.

4. Sectionneur, tel que défini dans la revendication 3, caractérisé par le fait que les galets roulent à l'intérieur d'un alésage pratiqué à l'extrémité du cylindre, concentriquement à clui-ci.

5. Sectionneur, tel que défini dans l'une quelconque des revendications précédentes, prise isolément, contenant des transformateurs de courant prévus en coopération avec l'âme d'au moins un pôle, lesdits transformateurs étant placés dans le cylindre ainsi que les sorties de leurs enroulements secondaires qui aboutissent à des bornes mobiles, solidaires de l'équipage mobile, caractérisé par le fait que ces bornes mobiles sont reliées à des bornes fixées au châssis par des liaisons souples appropriées constituées par un faisceau de fils souples s'enroulant en spirale dans une gorge du cylindre concentrique à celui-ci, une extrémité du faisceau traversant le fond de la gorge pour aboutir dans un alésage pratiqué dans des extrémités de celui-ci et être reliée aux bornes mobiles qui y aboutissent tandis que l'autre extrémité du faisceau est connectée aux bornes fixes du châssis.

6. Sectionneur, tel que défini dans la revendication 5, caractérisé par le fait que le transformateur de courant est du type à primaire monoconducteur réalisé dans chaque pôle par au moins un noyau composé d'un circuit magnétique autour duquel est bobiné un enroulement secondaire, lequel noyau est enfilé autour de l'âme conductrice et à l'intérieur du cylindre central.

7. Sectionneur, tel que défini dans la revendication 5, caractérisé par le fait que le transformateur de courant est réalisé dans chaque pôle et au sein du cylindre central par un enroulement primaire à plusieurs spires inséré entre les bras conducteurs d'un pôle traversant perpendiculairement un ou plusieurs noyaux.

8. Sectionneur, tel que défini dans la revendication 6, caractérisé par le fait que l'âme conductrice a un profil coudé avec une partie médiane concentrique au cylindre central autour de laquelle sont disposés les noyaux.

9. Sectionneur, tel que défini dans la revendication 7, caractérisé par le fait que les noyaux de transformateur de courant sont enfilé · ·orès moulage autour de traversées isolante · ·nstituées par l'âme conductrice du bras long · ·.n pôle revêtu d'une matière isolante, à l'intérieur d'alvéoles prévus dans le cylindre central, des goulottes étant prévues pour disposer les fils de liaison entre les bobinages et les bornes en bout de cylindre.

10. Sectionneur, tel que défini dans l'une ou l'autre des revendications 6 ou 7, prise isolément, caractérisé par le fait que la matière isolante de l'équipage mobile enrobe les âmes conductrices, les enroulements primaires et les noyaux des différents pôles, les noyaux étant soutenus, au moment de la coulée, par des supports servant de goulottes aux fils venant des noyaux, qui sont amenés aux bornes extérieures.

11. Sectionneur, tel que défini dans la revendication 9, caractérisé par le fait que les alvéoles contenant les circuits magnétiques et leur bobinage sont tapissés d'un revêtement conducteur relié à la masse tandis que des moyens sont prévus pour éviter la formation d'effluves électriques à l'extérieur de l'équipage mobile entre les contacts aux extrémités des pôles et le revêtement conducteur à la masse, à savoir:

a) sur le long bras, un dispositif approprié réalisant une répartition linéaire de tension,

b) sur le cylindre et le petit bras, des ombelles augmentant de la valeur voulue les distances de cheminement d'éventuelles étincelles mais ayant une forme ne gênant pas la rotation du cylindre vis-à-vis de l'écran correspondant.

12. Sectionneur, tel que défini dans l'une quelconque des revendications précédentes, prise isolément, caractérisé par le fait qu'on prévoit un diviseur capacitif dans chaque pôle, moulé dans la masse de la matière isolante du cylindre et constitué par un écran conducteur tubulaire concentrique à l'âme centrale du couple de bras, ledit écran étant relié électriquement à un conducteur noyé dans le cylindre et aboutissant à une borne à une extrémité de celui-ci.

**Claims**

1. Three-phase disconnecting switch whose axis is located in the plane of the parallel lines constituted approximately by the conductors, said axis being perpendicular to said lines, performing at least the disconnection function of an adjacent cut-off apparatus, comprising a mobile equipment pivoting about an axis and mounted on a chassis, a central cylinder made of insulating material, adapted to rotate about this axis and controlled by a lever, in order to be able to oscillate between two end positions in a quarter turn amplitude, disconnecting switch poles each composed of a conducting core fast with the cylinder, passing therethrough diametrically, and bearing at each end an electrical plug-in means cooperating during rotation of the mobile equipment with corresponding contacts of members of the cell, the conducting core forming arms on either side of the cylinder, the conducting cores being located in the same plane passing through the axis of the cylinder, the arms of one side cooperating with the fixed contacts of the cell, to perform the disconnection-insulation function in position of opening, in their vertical position, and with other contacts, in their horizontal position, the other arms, in position of closure cooperating with the corresponding contacts of the adjacent cut-off apparatus, to perform the function of disconnection as long as the voltage of the network requires this, the arms being coated with an insulating material up to the connecting pieces located at their end, screens fixed to the chassis, the free edges of said screens approaching as much as possible the cylinder and contacts on the chassis, connected to earth, cooperating with the contacts at the ends of the first arms, in horizontal position, i.e. in position of opening of the disconnecting switch, characterized by the combination:

a) of two first and second arms (4, 5) whose length is unequal,

b) of second arms (5) which are as short as allowed by the requirements of insulation to earth and between poles,

c) of screens fixed to this chassis, which are offset on either side of the horizontal diametrical plane of the cylinder, one conducting (12) in the vicinity of the long arms (4), the other insulating (11) in the vicinity of the short arms (5), the value of the offset being at least equal to the vertical dimensions of the arms in their horizontal position.

2. There-phase disconnecting switch as defined in Claim 1, characterized in that it is mounted on a sliding chassis.

3. Disconnecting switch as defined in one or the other of Claims 1, 2, characterized in that the guiding of the mobile equipment in rotation is effected at at least one of the ends of said assembly by abutment on three rollers with axes parallel to that of the cylinder and fixed on the façade or corresponding back of the chassis.

4. Disconnecting switch as defined in Claim 3, characterized in that the rollers roll inside a bore made at the end of the cylinder, concentrically thereto.

5. Disconnecting switch as defined in any one of the preceding Claims, taken separately, containing current transformers provided in cooperation with the core of at least one pole, said transformers being placed in the cylinder as well as the outputs of their secondary windings which terminate at mobile terminals, fast with the mobile equipment, characterized in that these mobile terminals are connected to terminals fixed to the chassis by appropriate supple connections constituted by a bundle of supple wires winding spirally in a groove in the cylinder concentric thereto, one end of the beam passing through the bottom of the groove to terminate in a bore made in ends thereof and be connected to the mobile terminals which terminate there, whilst the other end of the bundle is connected to the fixed terminals of the chassis.

6. Disconnecting switch as defined in Claim 5, characterized in that the current transformer is of the type with monoconductor primary winding made in each pole by at least one core composed of a magnetic circuit around which is coiled a secondary winding, which core is fitted around the conducting core and inside the central cylinder.

7. Disconnecting switch as defined in Claim 5, characterized in that the current transformer is made in each pole and within the central cylinder by a primary winding with a plurality of turns inserted between the conducting arms of a pole passing perpendicularly through one or more cores.

8. Disconnecting switch as defined in Claim 6, characterized in that the conducting core has a bent profile with a median part concentric to the central cylinder around which the cores are disposed.

9. Disconnecting switch as defined in Claim 7, characterized in that the current transformer cores are fitted after moulding around insulating crossovers constituted by the conducting core of the long arm of a pole coated with an insulating material, inside cavities provided in the central cylinder, channels being provided to dispose the connecting wires between the coils and the terminals at the end of cylinder.

10. Disconnecting switch as defined in one or the other of Claims 6 ou 7, taken separately, characterized in that the insulating material of the mobile equipment coats the conducting cores, the primary windings and the cores of the different poles, the cores being supported, at the moment of casting, by supports serving as channels for the wires coming from the cores, which are taken to the outer terminals.

11. Disconnecting switch as defined in Claim 9, characterized in that the cavities containing the magnetic circuits and their coil are coated with a conducting coating connected to earth whilst means are provided to avoid the formation of electrical discharges outside the mobile equipment between the contacts at the ends of the poles and the conducting coating to earth, namely:

a) on the long arm, an appropriate device effecting a linear voltage distribution,

b) on the cylinder and the small arm, umbels increasing by the desired value the possible distances of advance of sparks but having a form which does not hinder rotation of the cylinder with respect to the corresponding screen.

12. Disconnecting switch as defined in any one of the preceding Claims, taken separately, characterized in that a capacitive divider is provided in each pole, cast in the mass of the insulating material of the cylinder and constituted by a tubular conducting screen concentric to the central core of the couple of arms, said screen being electrically connectec to a conductor embedded in the cylinder and terminating at a terminal at one end thereof.

**Patentansprüche**

1. Dreiphasiger Trenner, dessen Achse in der Ebene der parallelen Strecke angeordnet ist, die die Leiter näherungsweise bilden, wobei die Achse rechtwinklig zu den Strecken verläuft und zumindest die Funktion des Abschaltens eines benachbarten Abtrenngerätes zulässt, mit einem beweglichen, um eine Achse schwenkbaren und auf einem Rahmen montierten beweglichen Werk, mit einem zentralen Zylinder aus isolierendem Werkstoff, der um diese Achse gedreht und durch einen Griff gesteuert ist und zwischen zwei Extremstellungen gemäss einer einer Vierteldrehung entsprechenden Amplitude gedreht werden kann, mit Trennpolen, von denen jeder aus einer leitenden, einstückig mit dem Zylinder ausgebildeten Seele besteht, den Zylinder diametral durchqueren und an jedem Ende ein während der Drehung des mobilen Werks mit den entsprechenden Kontakten, die Teil der Zelle sind, zusammenwirkende elektrische Einschaltmittel aufweist, wobei die leitende Seele Arme beiderseits des Zylinders bildet und die leitenden Seelen in der gleichen, durch die Achse des Zylinders hindurchgehenden Ebene angeordnet sind und die Arme einer Seite mit den Festkontakten der Zelle zur Sicherstellung der Isolations-Trennfunktion in der Öffnungsstellung in ihrer vertikalen Position und mit anderen Kontakten in ihrer horizontalen Lage zusammenwirken und die anderen Arme in der Schliessstellung mit den entsprechenden Kontakten des benachbarten Abtrenngeräts zur Sicherstellung des Abtrennens, soweit die Netzspannung das erfordert, zusammenwirkt, wobei die Arme durch einen isolierenden Werkstoff bis zu den an ihren Enden angeordneten Verbindungsstücken abgedeckt sind, und mit an dem Rahmen festgelegten Abschirmungen, deren freie Wände sich so nahe wie möglich dem Zylinder annähern und mit Kontakten an dem Rahmen, die mit Masse verbunden sind und mit den Kontakten an den Enden der ersten Arme in horizontaler Lage, das heisst in Öffnungsstellung des Trenners, zusammenwirken, gekennzeichnet durch die Kombination folgender Merkmale:

a) durch die beiden ersten und zweiten Arme (4, 5), deren Länge ungleich ist,

b) durch die zweiten Arme (5), die so kurz sind, dass sie den Isolationsforderungen zur Masse und zwischen den Polen genügen,

c) durch an dem Rahmen festgelegte Abschirmungen, die beiderseits der horizontalen Diametralebene des Zylinders versetzt sind, einer leitend (12) in der der Nachbarschaft der langen Arme (4) der andere isolierend (11) in der Nachbarschaft des kurzen Armes (5) angeordnet ist und die Versetzung einen Wert besitzt, der zumindest gleich dem vertikalen Platzbedarf der Arme in ihrer horizontalen Stellung entspricht.

2. Dreiphasiger Trenner nach Anspruch 1, dadurch gekennzeichnet, dass er auf einem gleitenden Rahmen montiert ist.

3. Trenner nach Anspruch 1 oder 2, dadurch gekennzeichnet, dass die Führung der Drehung des mobilen Werks an zumindest einem Ende der Baugruppe durch Abstützen auf drei Rollen mit Achsen bewirkt wird, die parallel zu jenen des Zylinders verlaufen und an der Vorderseite oder dem entsprechenden Boden des Rahmens festgelegt sind.

4. Trenner nach Anspruch 3, dadurch gekennzeichnet, dass die Rollen im Innern einer Bohrung laufen, die an dem Ende des Zylinders konzentrisch zu diesem angebracht ist.

5. Trenner nach einem jeden der vorhergehenden Ansprüche, mit Stromwandlern, die in Zusammenarbeit mit der Seele zumindest eines Pols vorgesehen sind und in dem Zylinder ebenso wie die Ausgänge von ihren Sekundärwicklungen angeordnet sind, die an bewegliche, einstückig mit dem beweglichen Werk ausgebildeten Klemmen angrenzen, dadurch gekennzeichnet, dass diese beweglichen Klemmen mit am Rahmen festgelegten Klemmen durch biegsame Verbindungen verbunden sind, die geeignet durch ein Bündel biegsamer Adern ausgebildet sind, die spiralförmig in einer Rille des Zylinders konzentrisch zu diesem aufgewickelt sind, und dass ein Ende des Bündels den Boden der Rille durchquert, so dass es zu einer in den Enden desselben angebrachten Bohrung führt und mit den beweglichen Klemmen verbunden ist, die dort angrenzen, während das andere Ende des Bündels mit den festen Klemmen des Rahmens verbunden ist.

6. Trenner nach Anspruch 5, dadurch gekennzeichnet, dass der Stromwandler primärseitig einadrig ausgebildet und in jedem Pol durch zumindest einen Kern verwirklicht wird, der aus einem magnetischen Schaltkreis besteht, um welchen eine Sekundärwicklung aufgespult ist, wobei der Kern um die leitende Seele und im Innern des zentralen Zylinders angebracht ist.

7. Trenner nach Anspruch 5, dadurch gekennzeichnet, dass der Stromwandler in jedem Pol und im Innern des zentralen Zylinders durch eine Primärwicklung mit mehreren Windungen gebildet ist, die zwischen den leitenden Armen eines einen oder mehrere Kerne senkrecht durchquerenden Pols eingesetzt sind.

8. Trenner nach Anspruch 6, dadurch gekennzeichnet, dass die leitende Seele ein bogenförmiges Profil mit einem mittleren Teil aufweist, der konzentrisch zum zentralen Zylinder verläuft und um den die Kerne angeordnet sind.

9. Trenner nach Anspruch 7, dadurch gekennzeichnet, dass die Kerne des Stromwandlers nach dem Giessen der quer verlaufenden Isolierteile, die durch die leitende Seele des langen Arms eines mit einem isolierenden Werkstoff bedeckten Pols gebildet werden, im Innern einer in dem zentralen Zylinder vorgesehenen Steckerbuchse eingebracht werden, wobei Rinnen zur Aufnahme der Verbindungskabel zwischen den Spulen und den Klemmen am Ende des Zylinders vorgesehen sind.

10. Trenner entweder nach Anspruch 6 oder nach Anspruch 7, dadurch gekennzeichnet, dass der isolierende Werkstoff des beweglichen Werks die leitenden Seelen, die Primärwicklungen und die Kerne der verschiedenen Pole ummantelt, wobei die Kerne im Augenblick des Gusses durch Träger gestützt werden, die den von den Kernen kommenden Adern, die zu den äusseren Klemmen geführt sind, als Rinnen dienen.

11. Trenner nach Anspruch 9, dadurch gekennzeichnet, dass die die magnetischen Schaltkreise enthaltenden Steckerbuchsen und ihre Spule mit einer leitenden, mit Masse verbundenen Beschichtung versehen sind, während Mittel vorgesehen sind, um die Bildung von Glimmentladungen im Äusseren des mobilen Werks zwischen den Kontakten an den Enden der Pole und der leitenden Beschichtung an Masse zu verhindern, und zwar folgende Mittel:

a) entlang des Arms eine geeignete Vorrichtung, die eine lineare Verteilung der Spannung bewerkstelligt,

b) auf dem Zylinder und dem kurzen Arm Dolden, die den gewollten Wert der Wegstrecken von eventuellen Funken übersteigen, aber eine die Drehbewegung des Zylinders gegenüber der entsprechenden Abschirmung nicht störende Form aufweisen.

12. Trenner nach jedem einzelnen der vorhergehenden Ansprüche, dadurch gekennzeichnet, dass ein kapazitiver Teiler in jedem Pol vorgesehen ist, der in die Masse des isolierenden Werkstoffes des Zylinders eingegossen und mit einer konzentrisch zu der zentralen Seele des Paars von Armen, rohrförmigen und leitenden Abschirmung gebildet ist, die elektrisch mit einem Leiter verbunden ist, der in dem Zylinder eingebettet ist und an einer Klemme an einem Ende desselben angrenzt.

Fig.1

Fig.2

Fig.3

Fig.4

Fig. 5

Fig. 6

Fig. 7

Fig. 8

*Fig.9*

*Fig.10*

*Fig.11*